# EUROPEAN PATENT APPLICATION

(11) **EP 4 722 480 A1**
(43) Date of publication of application: **08.04.2026**
(21) Application number: 24204753.8
(22) Date of filing: 04.10.2024
(51) Int. Cl.: E05C 3/14, E05C 19/06, E05B 5/00, E05B 7/00, E05C 3/12, H02B 1/38

(54) **ELECTRICAL ENCLOSURE**

(71) Applicant: Hager Industrial De Envolventes SAU, 08430 La Roca del Valles (ES)
(72) Inventor: Robreño, Carlos Francisco, 08034 Barcelona (ES); Solans, Joan, 08328 Alella (ES)
(74) Representative: Hagergroup

(57) **Abstract**

An electrical enclosure (10) comprises a main body (20) providing an interior space (I) and a door (30) being rotatably mounted to the main body (20). The door (30) comprises a door leaf (32) and a handle (40) rotatably mounted to the door leaf (32) to be rotatable around a second axis of rotation (B), the handle (40) comprising a hand grip (42) and at least one latching element (44) having a flexible tongue (46) and an engagement portion (48) being configured to engage a receiving portion (22) of the main body (20) in a shut position (SP) of the door (30) and a closed position (CP) of the handle (40). The engagement portion (48) is configured to be displaced in a displacement direction (DD) parallel to the second axis of rotation (B) through a flexible deformation of the tongue (46) when the door (30) is shut and the handle (40) takes the closed position (CP).

## Description

The present invention relates to an enclosure, more particularly to an electrical enclosure, and even more particularly to an electrical enclosure comprising a main body providing an interior space, and a door.

Electrical enclosures are designed to permit access to the interior space by persons operating or servicing the electrical enclosures or components housed in the interior space. In order to access and service the components, the door of the enclosure is opened.

Generally, the door is rotatably mounted on the main body between at least an open position and a shut position. The opened position of the door allows to permit access to the interior space of the main body. The door usually comprises a door leaf and a handle. The handle is often rotatably mounted to the door leaf between a closed position, in which the door is maintained closed, and a disengaged position, in which the opening of the door is enabled.

Document DE 299 17 091 U1 discloses an electrical enclosure of the aforementioned type. The main body of the electrical enclosure comprises a receiving portion and the handle comprises a hand grip and one latching element. The latching element has an engagement portion arranged at an extremity of the flexible tongue. The engagement portion is configured to engage the receiving portion in a shut position of the door and a closed position of the handle. According to that prior art document, the engagement portion is deflected in a displacement direction which is perpendicular to an axis of rotation of the handle when the door is shut.

However, when the door is shut and the handle is in the closed position, the latching element will have the tendency to act on the hand grip to lift the hand grip up when the latching element starts to engage in the receiving portion. Hence, it is made difficult or impossible to close the door by a mere action on the hand grip. Furthermore, a closing operation of the door may be impractical when the handle is blocked in the closed position.

In order to overcome these difficulties when shutting the door, the aforementioned prior art document proposes to provide a complex mechanism consisting of a plurality of separate parts allowing for a free movement of the latching element relatively to the hand grip.

The objective of the present invention is to provide an electrical enclosure which has a handle which is simple, easy and cost effective to manufacture, and which avoids the aforementioned drawbacks. If is a further object of the present invention to provide an electrical enclosure which allows for a smooth closing operation of the door by an action on the hand grip and/or to provide an electrical enclosure which can be close without the hand grip moving and/or without any rotational force being applied to the hand grip.

In accordance with the present invention, there is provided an electrical enclosure comprising a main body and a door. The main body provides an interior space for receiving electrical devices. The door is rotatably mounted to the main body to be rotatable around a first axis of rotation relatively to the main body. The door comprises a door leaf and a handle rotatably mounted to the door leaf to be rotatable around a second axis of rotation relatively to the door leaf.

The main body comprises a receiving portion. The handle comprises a hand grip and at least one latching element. The latching element has a flexible tongue and an engagement portion arranged at an extremity of the flexible tongue. The engagement portion is configured to engage the receiving portion in a shut position of the door and a closed position of the handle.

The electrical enclosure according to the present invention is characterized in that the engagement portion is configured to be displaced in a displacement direction parallel to the second axis of rotation through a flexible deformation of the tongue when the door is shut and the handle takes the closed position.

The electrical enclosure according to the present invention is simple, easy and cost effective to manufacture. The electrical enclosure according to the present invention allows for a smooth closing operation of the door where no movement of the hand grip relatively to the door leaf is induced. The electrical enclosure according to the present invention allows for a smooth closing operation of the door by an action on the hand grip.

Advantageously, the first axis of rotation is parallel to the second axis of rotation.

These features allow for a smooth opening operation of the door.

According to a preferred embodiment, the handle is configured to be rotated around the second axis from the closed position to a disengaged position to release the engagement portion from the receiving portion, the handle being further preferably configured to be rotated around the second axis from the closed position to the disengaged position in the same direction of rotation as the direction of rotation that the door follows from the shut position of the door to an open position of the door.

These features allow for a smooth opening operation of the door and allow for an opening of the door where stress is avoided in latching elements.

Preferably, the latching element is of the cantilever type, the tongue being attached to a base of the handle at an extremity of the tongue which is opposite to the extremity of the tongue where the engagement portion is arranged.

These features allow for a smooth shutting operation of the door by a mere action on the hand grip.

According to a preferred embodiment, the handle comprises two latching elements facing one another, the respective engagement portion of the two latching elements being configured to be displaced in two opposite displacement directions respectively when the door is shut and the handle takes the closed position, each displacement direction being parallel to the second axis of rotation.

These features allow to reduce the strain applied to the door and/or the door handle when the door is shut.

Preferably, the latching element comprises a first abutment surface and the receiving portion comprises a second abutment surface, the first abutment surface and the second abutment surface being configured to at least partially rest on one another when the door takes the shut position and the handle takes the closed position.

These features allow for the door to be securely shut when the handle takes the closed position.

According to a preferred embodiment, the second abutment surface comprises a rounded portion.

These features allow for a smooth transition of the handle from the closed position of the handle to the disengaged position of the handle.

Preferably, the receiving portion comprises a guiding portion and the latching element comprises a leading chamfer configured to bear against the guiding portion to displace the latching element in the displacement direction parallel to the second axis of rotation against a spring force of the tongue when the door is shut and the handle takes the closed position.

These aforementioned features allow for a smooth closing operation of the door by a mere action on the hand grip when the handle takes the closed position.

According to a preferred embodiment, the guiding portion comprises a guiding surface which substantially lies in a plane which is inclined with respect to a plane which is orthogonal to the second axis of rotation.

These features further allow for a smooth closing operation of the door by a mere action on the hand grip when the handle takes the closed position.

Preferably, the door comprises a spring mechanism urging the handle into the closed position.

Advantageously, the flexible tongue is essentially planar in shape and extends in a plane which is orthogonal to the second axis of rotation.

These features provide further flexibility to the flexible tongue and therefore contributes to a smooth shutting operation of the door by a mere action on the hand grip when the handle takes the closed position.

Preferably, the handle, the hand grip, the latching element, the tongue and/or the engagement portion are made of plastic.

These features allow for a simple, easy and cost-effective manufacturing of the handle.

According to a preferred embodiment, the latching element is symmetrical in shape with respect to a plane of symmetry, the second axis of rotation preferably lying in the plane of symmetry.

Further benefits and advantages of the present invention will become apparent after a careful reading of the detailed description with appropriate reference to the accompanying drawings.

In the drawings:

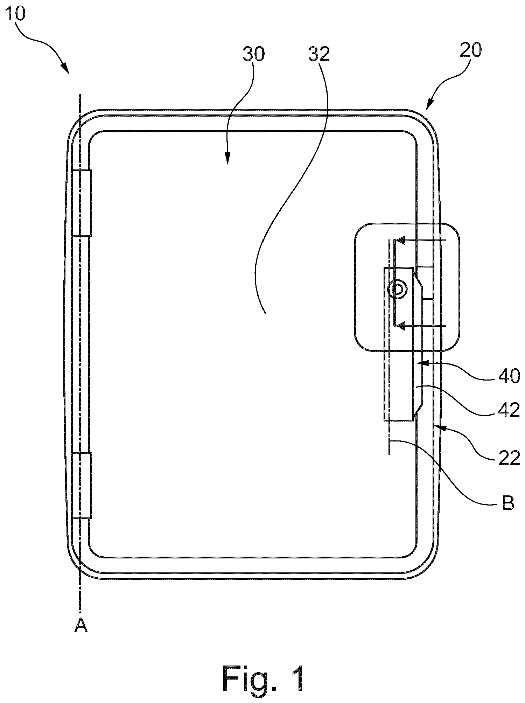

Fig. 1 is a top view of an electrical enclosure according to a preferred embodiment of the present invention;
Fig. 2 is a detailed perspective view of a door of the electrical enclosure according to the preferred embodiment where the handle takes a closed position;
Fig. 3 is a detailed perspective view of the door of the electrical enclosure according to the preferred embodiment where the handle takes a disengaged position; and
Fig. 4 is a detailed perspective view of the handle of the door of the electrical enclosure according to the preferred embodiment.

Referring to the drawings, an electrical enclosure 10 according to the preferred embodiment comprises a main body 20 providing an interior space I for receiving electrical devices and a door 30. The main body 20 comprises a rear wall, a first side wall, a second side wall, a third side wall and a fourth side wall which define the interior space I. The electrical devices received in the interior space I are typically protection devices, like for instance circuit breakers.

The door 30 is rotatably mounted to the main body 20 to be rotatable around a first axis of rotation A relatively to the main body 20. The door 30 comprises a door leaf 32 and a handle 40 rotatably mounted to the door leaf 32 to be rotatable around a second axis of rotation B relatively to the door leaf 32. Preferably, the first axis of rotation A is parallel to the second axis of rotation B. Preferably, the first axis of rotation A is distant from the second axis of rotation B.

The main body 20 comprises a receiving portion 22. The handle 40 comprises a hand grip 42 and at least one latching element 44. The latching element 44 has a flexible tongue 46 and an engagement portion 48 arranged at an extremity of the flexible tongue 46. The engagement portion 48 is configured to engage the receiving portion 22 in a shut position SP of the door 30 and a closed position CP of the handle 40. When the engagement portion 48 is received in the receiving portion 22, the door 30 is held shut, that is the door 30 may be prevented from being opened without an action on the hand grip 42.

Preferably, the flexible tongue 46 is essentially planar in shape and extends in a plane which is orthogonal to the second axis of rotation B.

The engagement portion 48 is configured to be displaced in a displacement direction DD, which is parallel to the second axis of rotation B, through a flexible deformation of the tongue 46 when the door 30 is shut and the handle 40 takes the closed position CP.

The electrical enclosure 10 according to the present invention is simple, easy and cost effective to manufacture. The electrical enclosure 10 allows for a smooth closing operation of the door 30 where no movement of the hand grip 42 relatively to the door leaf 32 is induced. The electrical enclosure 10 allows for a smooth closing operation of the door 30 by an action on the hand grip 42.

The handle 40, the hand grip 42, the latching element 44, the tongue 46 and/or the engagement portion 48 are preferably made of plastic and/or formed integrally. The handle 40, the hand grip 42, the latching element 44, the tongue 46 and/or the engagement portion 48 may be formed in one piece by injection molding for example.

According to the preferred embodiment, the handle 40 is configured to be rotated around the second axis B from the closed position CP to a disengaged position DP to release the engagement portion 48 from the receiving portion 22. Preferably, the handle 40 is configured to be rotated around the second axis B from the closed position CP to the disengaged position DP in the same direction of rotation as the direction of rotation that the door 30 follows from the shut position SP of the door 30 to an open position OP of the door 30.

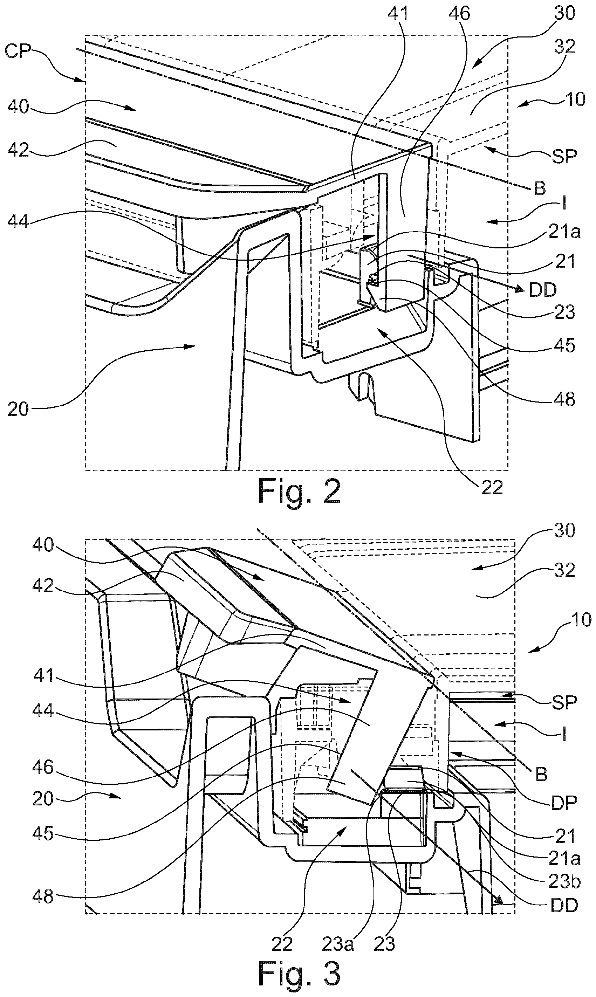

As can be seen in particular in figures 2 to 4, the latching element 44 is of the cantilever type. The tongue 46 is attached to a base 41 of the handle 40 at an extremity of the tongue 46 which is opposite to the extremity of the tongue 46 bearing the engagement portion 48.

Preferably, the latching element 44 is symmetrical in shape with respect to a plane of symmetry, the second axis of rotation B preferably lying in the plane of symmetry.

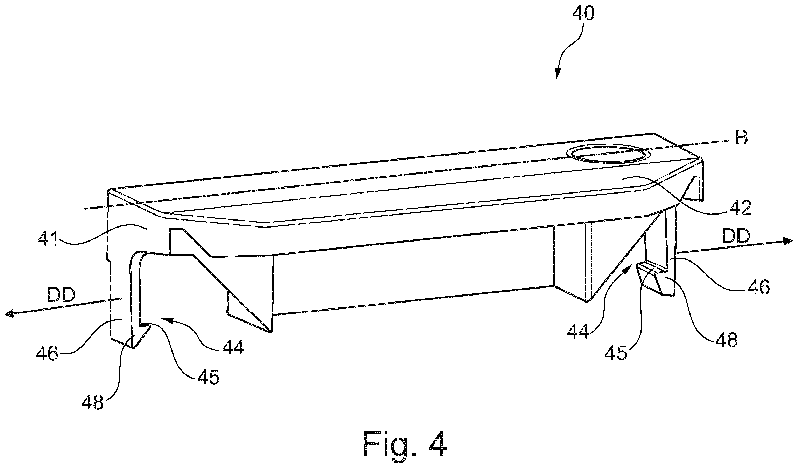

According to the preferred embodiment depicted in the figures, the handle 40 comprises two latching elements 44 facing one another, the respective engagement portion 48 of the two latching elements 44 being configured to be displaced in two opposite displacement directions DD respectively when the door 30 is shut and the handle 40 takes the closed position, each displacement direction DD being parallel to the second axis of rotation B. The two latching elements 44 are preferably both symmetrical in shape with respect to the same plane of symmetry. The two opposite displacement directions DD are preferably collinear, as depicted in figure 4.

As can be seen in particular in figures 2 and 3, according to the preferred embodiment, the latching element 44 comprises a first abutment surface 45 and the receiving portion 22 comprises a second abutment surface 23, the first abutment surface 45 and the second abutment surface 23 being configured to at least partially rest on one another when the door 30 takes the shut position SP of and the handle 40 takes the closed position CP.

The first abutment surface 45 may be essentially planar in shape and may extend in a plane which is parallel to the second axis of rotation B and/or which is parallel to the outer surface of the door leaf 32.

The second abutment surface 23 may comprise a planar portion 23b and a rounded portion 23a. The rounded portion 23a has preferably the shape of a right circular cylindrical surface, where the radius of said cylindrical surface corresponds to the distance between an edge of transition between the planar portion 23b and the rounded portion 23a, and the second axis of rotation B, and where the axis of revolution of said cylindrical coincides with the second axis of rotation B. The edge of transition between the planar portion 23b and the rounded portion 23a may lie within the plane of symmetry of the latching element 44 when the handle is in the closed position CP.

According to the preferred embodiment, the receiving portion 22 comprises a guiding portion 21 and the latching element 44 comprises a leading chamfer 43 configured to bear against the guiding portion 21 to displace the latching element 44 in the displacement direction parallel to the second axis of rotation B against a spring force of the tongue 46 when the door 30 is shut and the handle 40 takes the closed position CP. Preferably, the guiding portion 21 comprises a guiding surface 21a which substantially lies in a plane which is inclined with respect to a plane which is orthogonal to the second axis of rotation B. The leading chamfer 43 and the guiding surface 21a may be substantially parallel to one another.

The guiding portion 21 and/or the guiding surface 21a comes in contact with the leading chamfer 43 when the door is shut and the handle 40 takes the closed position CP, thereby deflecting the latching element 44 outward and in the displacement direction DD until the first abutment surface 45 goes past the second abutment surface 23 where the latching element 44 resiles, hence putting the first abutment surface 45 in contact with the second abutment surface 23.

The fact that the latching element 44 is deflected in a direction which is parallel to the second axis of rotation B assures that no force is applied to the handle 40 which could cause the handle 40 to rotate when the door 30 is shut while the handle takes the closed position CP.

When the door 30 is in the shut position SP and the handle 40 is moved from the closed position CP to the disengaged position DP by an action on the hand grip 42, the first abutment surface 45 glides along the rounded portion 23a until the first abutment surface 45 is separated from the second abutment surface 23.

Furthermore, the door 30 of the electrical enclosure 10 according to the preferred embodiment may comprise a spring mechanism (not shown in the figures) urging the handle 40 into the closed position.

## Claims

1. Electrical enclosure comprising a main body (20) and a door (30), the main body (20) providing an interior space (I) for receiving electrical devices, the door (30) being rotatably mounted to the main body (20) to be rotatable around a first axis of rotation (A) relatively to the main body (20), the door (30) comprising a door leaf (32) and a handle (40) rotatably mounted to the door leaf (32) to be rotatable around a second axis of rotation (B) relatively to the door leaf (32), the main body (20) comprising a receiving portion (22), the handle (40) comprising a hand grip (42) and at least one latching element (44), the latching element (44) having a flexible tongue (46) and an engagement portion (48) arranged at an extremity of the flexible tongue (46), the engagement portion (48) being configured to engage the receiving portion (22) in a shut position (SP) of the door (30) and a closed position (CP) of the handle (40), **characterized in that** the engagement portion (48) is configured to be displaced in a displacement direction (DD) parallel to the second axis of rotation (B) through a flexible deformation of the tongue (46) when the door (30) is shut and the handle (40) takes the closed position (CP).

2. Electrical enclosure according to claim 1, **characterized in that** the first axis of rotation (A) is parallel to the second axis of rotation (B).

3. Electrical enclosure according to any one of the claims 1 or 2, **characterized in that** the handle (40) is configured to be rotated around the second axis (B) from the closed position (CP) to a disengaged position (DP) to release the engagement portion (48) from the receiving portion (22), the handle (40) being preferably configured to be rotated around the second axis (B) from the closed position (CP) to the disengaged position (DP) in the same direction of rotation as the direction of rotation that the door (30) follows from the shut position (SP) of the door (30) to an open position (OP) of the door (30).

4. Electrical enclosure according to any one of the claims 1 to 3, **characterized in that** the latching element (44) is of the cantilever type, the tongue (46) being attached to a base (41) of the handle (40) at an extremity of the tongue (46) which is opposite to the extremity of the tongue (46) bearing the engagement portion (48).

5. Electrical enclosure according to any one of the claims 1 to 4, **characterized in that** the handle (40) comprises two latching elements (44) facing one another, the respective engagement portion (48) of the two latching elements (44) being configured to be displaced in two opposite displacement directions (DD) respectively when the door (30) is shut and the handle (40) takes the closed position, each displacement direction (DD) being parallel to the second axis of rotation (B).

6. Electrical enclosure according to any one of the claims 1 to 5, **characterized in that** the latching element (44) comprises a first abutment surface (45) and the receiving portion (22) comprises a second abutment surface (23), the first abutment surface (45) and the second abutment surface (23) being configured to at least partially rest on one another when the door (30) takes the shut position (SP) and the handle (40) takes the closed position (CP).

7. Electrical enclosure according to claim 6, **characterized in that** the second abutment surface (23) comprises a rounded portion (23a).

8. Electrical enclosure according to any one of the claims 1 to 7, **characterized in that** the receiving portion (22) comprises a guiding portion (21) and **in that** the latching element (44) comprises a leading chamfer (43) configured to bear against the guiding portion (21) to displace the latching element (44) in the displacement direction parallel to the second axis of rotation (B) against a spring force of the tongue (46) when the door (30) is shut and the handle (40) takes the closed position (CP).

9. Electrical enclosure according to claim 8, **characterized in that** the guiding portion (21) comprises a guiding surface (21a) which substantially lies in a plane which is inclined with respect to a plane which is orthogonal to the second axis of rotation (B).

10. Electrical enclosure according to any one of the claims 1 to 9, **characterized in that** the door (30) comprises a spring mechanism urging the handle (40) into the closed position.

11. Electrical enclosure according to any one of the claims 1 to 10, **characterized in that** the flexible tongue (46) is essentially planar in shape and extends in a plane which is orthogonal to the second axis of rotation (B).

12. Electrical enclosure according to any one of the claims 1 to 11, **characterized in that** the handle (40), the hand grip (42), the latching element (44), the tongue (46) and/or the engagement portion (48) are made of plastic.

13. Electrical enclosure according to any one of the claims 1 to 12, **characterized in that** the handle (40), the hand grip (42), the latching element (44), the tongue (46) and/or the engagement portion (48) are integrally formed.

14. Electrical enclosure according to any one of the claims 1 to 13, **characterized in that** the latching element (44) is symmetrical in shape with respect to a plane of symmetry, the second axis of rotation (B) preferably lying in the plane of symmetry.
